# EUROPEAN PATENT APPLICATION

(11) **EP 4 503 162 A1**
(43) Date of publication of application: **05.02.2025**
(21) Application number: 22934202.7
(22) Date of filing: 31.03.2022
(51) Int. Cl.: H01M 4/13, H01M 4/62, H01M 10/0525

(54) **ELECTROCHEMICAL APPARATUS AND ELECTRONIC APPARATUS**

(71) Applicant: Ningde Amperex Technology Limited, Ningde, Fujian 352100 (CN)
(72) Inventor: WANG, Xingyong, Ningde, Fujian 352100 (CN); HAN, Dongdong, Ningde, Fujian 352100 (CN); WANG, Kefei, Ningde, Fujian 352100 (CN)
(74) Representative: Klunker IP Patentanwälte PartG mbB
(86) International application number: PCT/CN2022/084456
(87) International publication number: WO 2023/184360

(57) **Abstract**

An electrochemical apparatus is provided and includes an electrode assembly. The electrode assembly includes an electrode plate; the electrode plate includes a current collector; the current collector includes a first region and a second region; an active material layer is arranged on the first region; and a functional layer is arranged on the second region, and the functional layer includes an organic polymer and inorganic particles, where the thickness of the functional layer is H1, where 1 µm ≤ H1 ≤ 15 µm; and Dv90 of the inorganic particles satisfies: 1 µm ≤ Dv90 ≤ 4.5 µm. The electrochemical apparatus in this application has a high electrolyte retention amount, high safety and good cycle performance. Further provided is an electronic apparatus including the electrochemical apparatus.

## Description

### TECHNICAL FIELD

This application relates to the field of energy storage, in particular to an electrochemical apparatus and an electronic apparatus.

### BACKGROUND

Due to the advantages of high energy density, good cycle performance, environmental friendliness, safety and no memory effect, secondary batteries (electrochemical apparatuses) are widely applied in the fields of portable electronic products, e-mobility and energy storage. At present, on one hand, electrolytes play an important role in cycle lives of the secondary batteries, and in order to ensure the long cycle lives of the batteries, surplus electrolytes need to be injected into the batteries to offset the consumption of the electrolytes in cycle processes. On the other hand, in order to improve the energy density of the batteries, compaction densities of positive and negative electrode plates are continuously increased, the high compaction densities result in less adsorption of the electrolytes by positive and negative active substances, and the electrolytes that are not absorbed are free in packaging bags (for example, aluminum-plastic films), which easily causes swelling of appearance of the batteries. In addition, in order to improve the safety performance of the secondary batteries, the energy densities of the secondary batteries are often sacrificed. Therefore, there is an urgent need to provide a technical means that can remarkably increase the electrolyte retention amount and safety performance of the secondary batteries.

### SUMMARY

In order to overcome the defects in the prior art, this application provides an electrochemical apparatus and an electronic apparatus comprising the electrochemical apparatus. The electrochemical apparatus in this application has a high electrolyte retention amount, high safety and good cycle performance.

In a first aspect, this application provides an electrochemical apparatus, comprising an electrode assembly, where the electrode assembly comprises an electrode plate; the electrode plate comprises a current collector; the current collector comprises a first region and a second region; an active material layer is arranged on the first region; and a functional layer is arranged on the second region, and the functional layer comprises an organic polymer and inorganic particles, where the thickness of the functional layer is H1, where 1 µm ≤ H1 ≤ 15 µm; and Dv90 of the inorganic particles satisfies: 1 µm ≤ Dv90 ≤ 4.5 µm. The applicant of this application have found that a current collector region of the electrode plate which is not coated with an active material is coated with the functional layer comprising the organic polymer and the inorganic particles, so that on one hand, the organic polymer in the functional layer can absorb a free electrolyte, thereby avoiding an uneven surface of the electrochemical apparatus caused by the fact that the surplus electrolyte are non-uniformly free in a packaging bag (an aluminum-plastic film) while increasing the electrolyte retention amount of the electrochemical apparatus, then improving the appearance flatness of the electrochemical apparatus, reducing the energy density loss of the electrochemical apparatus, and improving the later cycle performance of the electrochemical apparatus. On the other hand, the inorganic particles in the functional layer can prevent the failure caused by an internal short-circuit caused when the electrochemical apparatus is pierced by an external force, thereby effectively improving the safety performance of the electrochemical apparatus during penetration testing. Dv90 of the inorganic particles may affect the thickness of the functional layer, and the excessively large thickness of the functional layer may be caused by the excessively large Dv90 of the inorganic particles. Moreover, the energy density of the electrochemical apparatus may be reduced by the excessively large thickness of the functional layer. In this application, the thickness of the functional layer and Dv90 of the inorganic particles are controlled within the above ranges, so that the electrochemical apparatus can have the low energy density loss and good cycle performance on the premise of satisfying the high electrolyte retention amount and safety performance.

In some embodiments, the functional layer can absorb the electrolyte. According to some embodiments of this application, 5 µm ≤ H1 ≤ 15 µm. The functional layer is mainly used for absorbing the electrolyte, so that when the thickness of the functional layer is too low, the electrolyte retention rate of the functional layer is relatively low, which is adverse to the improvement of the appearance of the electrochemical apparatus and the improvement of the later cycle performance.

According to some embodiments of this application, the inorganic particles satisfy 0.1 µm ≤ Dv10 ≤ 0.8 µm. In some embodiments, the inorganic particles satisfy 0.5 µm ≤ Dv50 ≤ 2.0 µm. In some embodiments, the inorganic particles satisfy 1 µm ≤ Dv90 ≤ 2.5Dv50.

According to some embodiments of this application, the coverage of the functional layer on the second region is in a range of 80% to 100%. When the coverage is within the above range, the safety of the electrochemical apparatus can be improved, and the electrolyte retention amount thereof can be increased.

According to some embodiments of this application, the inorganic particles comprise at least one of boehmite, diaspore, aluminum oxide, barium sulfate, calcium sulfate or calcium silicate.

According to some embodiments of this application, the organic polymer comprises a polymer formed by at least one of acrylic monomers, acrylate monomers or styrene monomers.

According to some embodiments of this application, the swelling degree of the functional layer is in a range of 200% to 800%. When the swelling degree of the functional layer is lower than 200%, the electrolyte retention rate of the functional layer is relatively low, which is adverse to the improvement of the appearance of the electrochemical apparatus. When the swelling degree of the functional layer is higher than 800%, the stability of the functional layer is poor, demolding occurs easily in the cycle process, and then the improvement effect of the appearance and the electrical performance of subsequent cycles are affected. In some embodiments, the swelling degree of the functional layer is in a range of 300% to 600%.

According to some embodiments of this application, thermo-gravimetric analysis is used, the functional layer contains a substance having an exothermic peak in a range of 280°C to 460°C, and this substance may be a styrene-acrylate copolymer, which is a polymer formed by at least one of acrylic acid, methacrylic acid and methyl methacrylate.

According to some embodiments of this application, on the basis of the mass of the functional layer, the mass percentage content of the organic polymer is in a range of 20% to 90%.

According to some embodiments of this application, the bonding strength between the functional layer and the current collector is in a range of 100 N/m to 600 N/m.

According to some embodiments of this application, nondestructive ultrasonic intelligent diagnostic system testing is used, in a thickness direction of the electrochemical apparatus, ultrasonic waves are emitted to the electrochemical apparatus, a signal feedback distribution diagram of the electrochemical apparatus to the ultrasonic waves, and on the basis of the area of the electrochemical apparatus in the signal feedback distribution diagram, an area ratio of a region with the super signal intensity greater than or equal to 1333 mV is in a range of 30% to 95%. The ultrasonic waves are mechanical waves needing to be propagated by means of a medium. When electrode materials are not soaked in the electrolyte, the ultrasonic waves can only be propagated by means of the direct contact between particles of the electrode materials, a lot of ultrasonic waves are reflected and refracted by the irregular particles, and the signal strength is attenuated severely. However, when the electrode materials can be completely soaked in the electrolyte, a good propagation path is provided by a liquid environment for the ultrasonic waves, and a significant proportion of the ultrasonic waves will not be interfered by the particles, thereby ensuring the signal strength. Therefore, during the nondestructive ultrasonic intelligent diagnostic system testing, signal feedback strength of various portions of the electrochemical apparatus for the ultrasonic waves can well represent distribution and infiltration conditions of the electrolyte in the electrochemical apparatus, and as the region ratio with the high signal strength increases, the distribution uniformity of the electrolyte in the electrochemical apparatus increases.

According to some embodiments of this application, the flatness of the electrochemical apparatus is in a range of 0 to 0.5 mm.

According to some embodiments of this application, the electrode assembly is a wound type electrode assembly, the second region is arranged at a winding starting end and a winding tail end of the current collector, and the functional layer is arranged on the second region of the tail end.

In a second aspect, this application provides an electronic apparatus, comprising the electrochemical apparatus in the first aspect.

In this application, the current collector region of the electrode plate which is not coated with the active material is coated with the functional layer comprising the organic polymer and the inorganic particles, so that on one hand, the uneven surface of the electrochemical apparatus caused by the fact that the surplus electrolyte are non-uniformly free in the packaging bag (the aluminum-plastic film) can be avoided while the electrolyte retention amount of the electrochemical apparatus is increased, then the appearance flatness of the electrochemical apparatus can be improved, the energy density loss of the electrochemical apparatus can be reduced, and the later cycle performance of the electrochemical apparatus can be improved. On the other hand, the failure caused by the internal short-circuit caused when the electrochemical apparatus is pierced by the external force can be prevented, thereby effectively improving the safety performance of the electrochemical apparatus during penetration testing.

### BRIEF DESCRIPTION OF THE DRAWINGS

FIG. 1 is a schematic diagram of an electrode plate in an electrochemical apparatus according to some embodiments of this application, where 1-current collector; 2-active material layer; and 3-functional layer.
FIG. 2 is a schematic diagram of a wound type electrode assembly in an electrochemical apparatus according to some embodiments of this application, where 1-current collector; 2-active material layer; 3-functional layer; 4-winding tail end; and 5-winding starting end, where the functional layer is arranged at the winding tail end of the current collector.

### DETAILED DESCRIPTION

This application is further described below in conjunction with specific embodiments. It should be understood that these specific embodiments are only intended to illustrate this application, but are not intended to limit the scope of this application.

### I.Electrochemical apparatus

This application provides an electrochemical apparatus, including an electrode assembly, where the electrode assembly includes an electrode plate; the electrode plate includes a current collector; the current collector includes a first region and a second region; an active material layer is arranged on the first region; and a functional layer is arranged on the second region, and the functional layer includes an organic polymer and inorganic particles, where the thickness of the functional layer is H1, where 1 µm ≤ H1 ≤ 15 µm; and Dv90 of the inorganic particles satisfies: 1 µm ≤ Dv90 ≤ 4.5 µm. The applicant of this application have found that a current collector region of the electrode plate which is not coated with an active material is coated with the functional layer including the organic polymer and the inorganic particles, so that on one hand, the organic polymer in the functional layer can absorb a free electrolyte, thereby avoiding an uneven surface of the electrochemical apparatus caused by the fact that the surplus electrolyte are non-uniformly free in a packaging bag (an aluminum-plastic film) while increasing the electrolyte retention amount of the electrochemical apparatus, then improving the appearance flatness of the electrochemical apparatus, reducing the energy density loss of the electrochemical apparatus, and improving the later cycle performance of the electrochemical apparatus. On the other hand, the inorganic particles in the functional layer can prevent the failure caused by an internal short-circuit caused when the electrochemical apparatus is pierced by an external force, thereby effectively improving the safety performance of the electrochemical apparatus during penetration testing. In this application, the thickness of the functional layer and Dv90 of the inorganic particles are controlled within the above ranges, so that the electrochemical apparatus can have the low energy density loss and good cycle performance on the premise of satisfying the high electrolyte retention amount and safety performance.

The "second region" in this application can refer to a blank region of the current collector which is not provided with the active material layer.

According to some embodiments of this application, Dv90 of the inorganic particles is 0.5 µm, 1.0 µm, 1.2 µm, 1.5 µm, 1.7 µm, 2.0 µm, 2.3 µm, 2.5 µm, 2.7 µm, 3.0 µm, 3.1 µm, 3.3 µm, 3.5 µm, 3.7 µm, 3.9 µm, 4.0 µm, 4.2 µm, 4.4 µm or in a range formed by any two of these values. Dv90 of the inorganic particles may affect the thickness of the functional layer, and the excessively large thickness of the functional layer may be caused by the excessively large Dv90 of the inorganic particles. Moreover, the energy density of the electrochemical apparatus may be reduced by the excessively large thickness of the functional layer.

According to some embodiments of this application, the inorganic particles satisfy 0.1 µm ≤ Dv10 ≤ 0.8 µm, for example, Dv10 is 0.1 µm, 0.2 µm, 0.3 µm, 0.4 µm, 0.5 µm, 0.6 µm, 0.7 µm or in a range formed by any two of these values. In some embodiments, the inorganic particles satisfy 0.5 µm ≤ Dv50 ≤ 2.0 µm, for example, Dv50 is 0.5 µm, 0.7 µm, 1.0 µm, 1.2 µm, 1.5 µm, 1.7 µm, 1.9 µm or in a range formed by any two of these values. In some embodiments, the inorganic particles satisfy 1 µm ≤ Dv90 ≤ 2.5Dv50.

In this application, Dv90 represents that 90% of the particle sizes of the inorganic particles in particle size distribution on a volume basis are smaller than said value. Dv50 represents that 50% of the particle sizes of the inorganic particles in particle size distribution on the volume basis are smaller than said value. Dv10 represents that 10% of the particle sizes of the inorganic particles in particle size distribution on the volume basis are smaller than said value.

According to some embodiments of this application, the thickness H1 of the functional layer is 1.5 µm, 2.0 µm, 3.0 µm, 4.0 µm, 4.5 µm, 5.0 µm, 5.5 µm, 6.0 µm, 6.5 µm, 7.0 µm, 7.5 µm, 8.0 µm, 8.5 µm, 9.0 µm, 9.5 µm, 10 µm, 10.5 µm, 11 µm, 11.5 µm, 12 µm, 12.5 µm, 13 µm, 13.5 µm, 14 µm, 14.5 µm or in a range formed by any two of these values. In some embodiments, the functional layer can absorb the electrolyte. The functional layer is mainly used for absorbing the electrolyte, so that when the thickness of the functional layer is too low, the electrolyte retention rate of the functional layer is relatively low, which is adverse to the improvement of the appearance of the electrochemical apparatus and the improvement of the later cycle performance. The energy density of the electrochemical apparatus may be reduced by the excessively large thickness of the functional layer. In some embodiments, 5 µm ≤ H1 ≤ 15 µm.

According to some embodiments of this application, the coverage of the functional layer on the second region is in a range of 80% to 100%. When the coverage is within the above range, the safety of the electrochemical apparatus can be improved, and the electrolyte retention amount thereof can be increased.

In this application, the coverage of the functional layer on the second region represents the coverage degree of the functional layer on a surface of the second region and is determined by the following manner: in an environment of (25+/-3)°C, the electrode plate coated with the functional layer is disassembled from the electrochemical apparatus; and the electrode plate is placed in an oven of 85°C for drying, the area W3 of the functional layer and the total area W2 of all blank current collectors in the electrode plate are measured respectively, and the coverage of the functional layer on the second region is W3/W2 × 100%.

According to some embodiments of this application, the inorganic particles include at least one of boehmite, diaspore, aluminum oxide, barium sulfate, calcium sulfate or calcium silicate.

According to some embodiments of this application, the organic polymer includes a polymer formed by at least one of acrylic monomers, acrylate monomers or styrene monomers.

In some embodiments, the acrylic monomers include at least one of compounds shown in formula I, 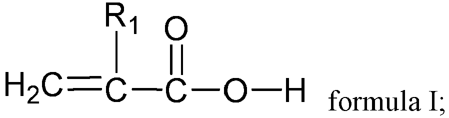 where R₁ is selected from hydrogen or C₁-C₁₀ alkyl groups and halogen-substituted C₁-C₁₀ alkyl groups. According to some embodiments of this application, R₁ is selected from C₁-C₆ alkyl groups and halogen-substituted C₁-C₆ alkyl groups. In some embodiments of this application, R₁ is selected from methyl, ethyl, fluorinated ethyl, propyl, fluorinated propyl, butyl, fluorinated butyl, pentyl or fluorinated pentyl.

In some embodiments, the acrylic monomers include at least one of acrylic acid, methacrylic acid and ethylacrylic acid.

In some embodiments, the acrylate monomers include at least one of compounds shown in formula II, 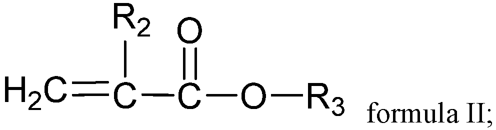 where R₂ is selected from hydrogen, C₁-C₁₀ alkyl groups or halogen-substituted C₁-C₁₀ alkyl groups; and R3 is selected from C₁-C₁₀ alkyl groups and halogen-substituted C₁-C₁₀ alkyl groups. According to some embodiments of this application, R₂ is selected from hydrogen, C₁-C6 alkyl groups or halogen-substituted C₁-C₆ alkyl groups; and R3 is selected from C₁-C₆ alkyl groups and halogen-substituted C₁-C₆ alkyl groups. In some embodiments of this application, R₂ is selected from hydrogen, methyl, ethyl or propyl; and R₃ is selected from methyl, ethyl, fluorinated ethyl, propyl, fluorinated propyl, butyl, fluorinated butyl, pentyl or fluorinated pentyl.

In some embodiments, the acrylate monomers include at least one of methyl acrylate, methyl methacrylate, methyl ethyl acrylate, ethyl acrylate, ethyl methacrylate, ethyl acrylate, propyl acrylate, propyl methacrylate, ethyl propyl acrylate, butyl acrylate, butyl methacrylate, ethyl butyl acrylate, amyl methacrylate or amyl acrylate.

According to some embodiments of this application, the styrene monomers include at least one of compounds shown in formula III, 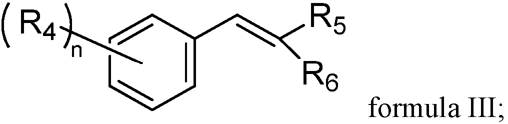 where n is an integer in a range of 1-5, for example, 2, 3 or 4; each R₄ is the same or different, and is independently selected from hydrogen, C₁-C₁₀ alkyl groups or halogen-substituted C₁-C₁₀ alkyl groups; and R₅ and R₆ are the same or different and are independently selected from C₁-C₁₀ alkyl groups or halogen-substituted C₁-C₁₀ alkyl groups. According to some embodiments of this application, R₄ is selected from hydrogen, C₁-C₆ alkyl groups or halogen-substituted C₁-C₆ alkyl groups; and R₅ and R₆ are the same or different and are independently selected from C₁-C₆ alkyl groups or halogen-substituted C₁-C₆ alkyl groups. In some embodiments of this application, R₄, R₅ and R₆ are independently selected from hydrogen, methyl, ethyl or propyl.

In some embodiments, the styrene monomers include at least one of styrene, methyl styrene, 2-methyl styrene and 2, 4-dimethyl styrene.

According to some embodiments of this application, raw materials forming the organic polymer include at least one of a pure acrylic emulsion, a styrene-acrylic emulsion or an acrylate emulsion. In some embodiments, the organic polymer includes at least one of the pure acrylic emulsion, the styrene-acrylic emulsion or the acrylate emulsion.

According to some embodiments of this application, the raw materials forming the organic polymer include the pure acrylic emulsion and the styrene-acrylic emulsion. In some embodiments, on the basis of the total mass of the pure acrylic emulsion and the styrene-acrylic emulsion, the mass content of the pure acrylic emulsion is in a range of 50% to 90%, and the mass content of the styrene-acrylic emulsion is in a range of 10% to 50%.

According to some embodiments of this application, the swelling degree of the functional layer is in a range of 200% to 800%. In some embodiments, the swelling degree of the functional layer is 220%, 250%, 270%, 320%, 350%, 370%, 390%, 400%, 420%, 450%, 470%, 500%, 520%, 540%, 570%, 600%, 620%, 650%, 670%, 700%, 720%, 750%, 770% or in a range formed by any two of these values. When the swelling degree of the functional layer is lower than 200%, the electrolyte retention rate of the functional layer is relatively low, which is adverse to the improvement of the appearance of the electrochemical apparatus. When the swelling degree of the functional layer is higher than 800%, the stability of the functional layer is poor, demolding occurs easily in the cycle process, and then the improvement effect of the appearance and the electrical performance of subsequent cycles are affected. In some embodiments, the swelling degree of the functional layer is in a range of 300% to 600%.

According to some embodiments of this application, thermo-gravimetric analysis is used, and the functional layer contains a substance having an exothermic peak in a range of 280°C to 460°C.

According to some embodiments of this application, on the basis of the mass of the functional layer, the mass percentage content of the organic polymer is in a range of 20% to 90%, for example, 20%, 25%, 30%, 35%, 40%, 45%, 50%, 55%, 60%, 65%, 70%, 75%, 80%, 85% or a range formed by any two of these values. In some embodiments, on the basis of the mass of the functional layer, the mass percentage content of the organic polymer is in a range of 40% to 70%.

According to some embodiments of this application, the bonding strength between the functional layer and the current collector is in a range of 100 N/m to 600 N/m.

According to some embodiments of this application, nondestructive ultrasonic intelligent diagnostic system testing is used, in a thickness direction of the electrochemical apparatus, ultrasonic waves are emitted to the electrochemical apparatus, a signal feedback distribution diagram of the electrochemical apparatus to the ultrasonic waves, and on the basis of the area of the electrochemical apparatus in the signal feedback distribution diagram, an area ratio of a region with the super signal intensity greater than or equal to 1333 mV is in a range of 30% to 95%. The ultrasonic waves are mechanical waves needing to be propagated by means of a medium. When electrode materials are not soaked in the electrolyte, the ultrasonic waves can only be propagated by means of the direct contact between particles of the electrode materials, a lot of ultrasonic waves are reflected and refracted by the irregular particles, and the signal strength is attenuated severely. However, when the electrode materials can be completely soaked in the electrolyte, a good propagation path is provided by a liquid environment for the ultrasonic waves, and a significant proportion of the ultrasonic waves will not be interfered by the particles, thereby ensuring the signal strength. Therefore, during the nondestructive ultrasonic intelligent diagnostic system testing, signal feedback strength of various portions of the electrochemical apparatus for the ultrasonic waves can well represent distribution and infiltration conditions of the electrolyte in the electrochemical apparatus, and as the region ratio with the high signal strength increases, the distribution uniformity of the electrolyte in the electrochemical apparatus increases.

According to some embodiments of this application, the area ratio of a region with the signal intensity greater than or equal to 1333 mV is 35%, 38%, 40%, 45%, 47%, 50%, 53%, 55%, 57%, 60%, 63%, 65%, 67%, 70%, 73%, 75%, 77%, 80%, 83%, 85%, 87%, 90%, 92%, 94% or in a range formed by any two of these values. In some embodiments, the area ratio of the region with the signal intensity greater than or equal to 1333 mV is in a range of 50% to 95%.

According to some embodiments of this application, the electrolyte retention rate of the functional layer is in a range of 40% to 120%. In some embodiments, the electrolyte retention rate of the functional layer is 45%, 50%, 55%, 60%, 65%, 70%, 75%, 80%, 85%, 90%, 95%, 100%, 105%, 110%, 115% or in a range formed by any two of these values. Under the condition that the shipping appearance of the electrochemical apparatus meets requirements, increasing the electrolyte retention rate is beneficial to the improvement the later cycle stability of the electrochemical apparatus.

According to some embodiments of this application, the flatness of the electrochemical apparatus is in a range of 0 to 0.5 mm.

According to some embodiments of this application, the electrode assembly is a wound type electrode assembly, the second region is arranged at a winding starting end and a winding tail end of the current collector, and the functional layer is arranged on the second region of the tail end.

According to some embodiments of this application, the active material layer is a positive active material layer and/or a negative active material layer.

According to some embodiments of this application, the positive active material layer includes a positive active material, a binder and a conductive agent. In some embodiments, the positive active material may include at least one of lithium cobalt oxide, nickel-manganese lithium cobalt oxide, nickel-manganese lithium aluminate, lithium iron phosphate, lithium vanadium phosphate, lithium cobalt phosphate, lithium manganese phosphate, lithium ferromanganese phosphate, lithium iron silicate, lithium vanadium silicate, lithium cobalt silicate, lithium manganese silicate, spinel lithium manganate, spinel nickel lithium manganate and lithium titanate. In some embodiments, the binder may include various binder polymers, for example, at least one of polyvinylidene fluoride, polytetrafluoroethylene, polyolefine, sodium carboxymethylcellulose, lithium carboxymethyl cellulose, modified polyvinylidene fluoride, modified SBR or polyurethane. In some embodiments, any conductive material can be used as the conductive agent as long as the conductive material does not cause chemical changes. The conductive agent includes, for example, carbon-based materials such as natural graphite, synthetic graphite, carbon black, acetylene black, Ketjen black and carbon fibers, metal-based materials such as metal powder or metal fibers including copper, nickel, aluminum and silver, conductive polymers such as polyphenylene derivatives, or their mixtures.

According to some embodiments of this application, the negative active material layer includes a negative active material, a binder and a conductive agent. In some embodiments, the negative active material may include a material with lithium ions reversibly intercalated/deintercalated, a lithium metal, a lithium metal alloy or a transition metal oxide. In some embodiments, the negative active material includes at least one of a carbon material or a silicon material, the carbon material includes at least one of graphite and hard carbon, and the silicon material includes at least one of silicon, a silicon-oxygen compound, a nickel carbon compound or a silicon alloy. In some embodiments, the binder includes at least one of butadiene styrene rubber, polyacrylic acid, polyacrylic acid salt, polyimide, polyamide-imide, polyvinylidene fluoride, polyvinylidene difluoride, polytetrafluoroethylene, waterborne acrylic resin, polyvinyl formal or styrene-acrylic copolymer resin. In some embodiments, any conductive material can be used as the conductive agent as long as the conductive material does not cause chemical changes. In some embodiments, the conductive material includes at least one of conductive carbon black, acetylene black, carbon nano tubes, Ketjen black, conductive graphite or graphene.

According to some embodiments of this application, the current collector is a positive current collector and/or a negative current collector. In some embodiments, the positive current collector may be metal foil or a composite current collector, for example, aluminum foil may be used. The composite current collector can be formed by forming metal materials (such as copper, a copper alloy, nickel, a nickel alloy, titanium, a titanium alloy, silver and a silver alloy) on a polymer substrate. In some embodiments, the negative current collector may be copper foil, nickel foil, stainless steel foil, titanium foil, foamed nickel, foamed copper, a polymer substrate coated with conductive metals or their combinations.

The electrode assembly in this application further includes an isolating film, and the material and shape of the isolating film used in the electrode assembly in this application are not particularly limited and may be techniques disclosed in any prior art. In some embodiments, the isolating film includes a polymer or an inorganic substance formed from a material stable to the electrolyte in this application. For example, the isolating film may include a substrate layer and a surface treatment layer. The substrate layer is a non-woven fabric, film or composite film of a porous structure and is made of a material selected from at least one of polyethylene, polypropylene, polyethylene glycol terephthalate and polyimide. Specifically, the porous polypropylene film, the porous polyethylene film, the polypropylene non-woven fabric, the polyethylene non-woven fabric or the porous polypropylene-polyethylene-polypropylene composite film may be used.

At least one surface of the substrate layer is provided with the surface treatment layer, and the surface treatment layer may be a polymer layer or an inorganic substance layer, and may also be a layer formed by mixing the polymer and the inorganic substance.

The inorganic substance layer includes inorganic particles and a binder, and the inorganic particles are selected from at least one of aluminum oxide, silicon oxide, magnesium oxide, titanium oxide, hafnium oxide, tin oxide, ceric oxide, nickel oxide, zinc oxide, calcium oxide, zirconium oxide, yttrium oxide, silicon carbide, boehmite, aluminum hydroxide, magnesium hydroxide, calcium hydroxide and barium sulfate. The binder is selected from at least one of polyvinylidene fluoride, a copolymer of vinylidene fluoride-hexafluoropropylene, polyamide, polyacrylonitrile, polyacrylate, polyacrylic acid, polyacrylate, polyvinylpyrrolidone, polyvinylalkoxy, polymethyl methacrylate, polytetrafluoroethylene and polyhexafluoropropylene.

The polymer layer includes the polymer, and a material of the polymer is selected from at least one of polyamide, polyacrylonitrile, an acrylate polymer, polyacrylic acid, polyacrylate, polyvinylpyrrolidone, polyvinylalkoxy, polyvinylidene fluoride and poly(vinylidene fluoride-hexafluoropropylene).

The electrochemical apparatus in this application further includes the electrolyte. The electrolyte applicable to this application may be an electrolyte known in the prior art.

In some embodiments, the electrolyte includes an organic solvent, a lithium salt and an optional additive. The organic solvent of the electrolyte according to this application may be any known organic solvent that can be used as a solvent of the electrolyte in the prior art. An electrolyte used in the electrolyte according to this application is not limited and may be any electrolyte known in the prior art. The additive in the electrolyte according to this application may be any known additive that can be used as an additive of the electrolyte in the prior art. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), polypropylene carbonate or ethyl propionate. In some embodiments, the organic solvent includes an ether solvent, for example, including at least one of 1, 3-dioxolane (DOL) and dimethoxyethane (DME). In some embodiments, the lithium salt includes at least one of an organic lithium salt or an inorganic lithium salt. In some embodiments, the lithium salt includes, but is not limited to: lithium hexafluorophosphate (LiPF₆), lithium tetrafluoroborate (LiBF₄), lithium difluorophosphate (LiPO₂F₂), lithium bis(trifluoromethanesulfonyl)imide (LiN(CF₃SO₂)₂) (LiTFSI), lithium bis(fluorosulfonyl)imide (Li(N(SO₂F)₂)) (LiFSI), lithium bis(oxalate)borate (LiB(C₂O₄)₂) (LiBOB) or lithium difluoro(oxalato)borate (LiBF₂(C₂O₄)) (LiDFOB).

In some embodiments, the electrochemical apparatus in this application includes, but is not limited to: all kinds of primary batteries, secondary batteries or capacitors. In some embodiments, the electrochemical apparatus is a lithium secondary battery. In some embodiments, the lithium secondary battery includes, but is not limited to: a sodium ion secondary battery, a lithium metal secondary battery, a lithium ion secondary battery, a lithium polymer secondary battery or a lithium ion polymer secondary battery.

### II: Electronic apparatus

This application further provides an electronic apparatus, including the electrochemical apparatus in the first aspect of this application.

An electronic device or apparatus in this application is not particularly limited. In some embodiments, the electronic device in this application includes, but is not limited to: laptops, pen computers, laptop computers, e-book players, portable phones, portable fax machines, portable copying machines, portable printers, stereo headphones, video recorders, LCD TVs, portable cleaners, portable CD players, mini CDs, transceivers, electronic notepads, calculators, memory cards, portable recorders, radios, emergency power supplies, electric motors, cars, motorcycles, power-assisted bicycles, bicycles, lighting appliances, toys, game machines, clocks, electric tools, flashlights, cameras, household large storage batteries and capacitors.

In the following embodiments and comparison embodiments, used reagents, materials and instruments are commercially available if there are no special instructions.

### Embodiments and comparison embodiments

Slurry preparation for the functional layer: the binder (see the table below for the specific composition), the inorganic particles (see the table below for the specific composition) and the solvent are uniformly mixed to prepare slurry, where the mass ratio of the binder to the inorganic particles in the slurry is 17:3. The slurry should be controlled to have the viscosity in a range of 200-3000 mPa·S and the solid content in a range of 35%-50%. The solvent is selected according to the type of the binder. When the water-based binder is used, the water-based solvent (for example, deionized water) can be used; and when the oil-based binder is used, the oil-based solvent (for example, N-methylpyrrolidone) can be used.

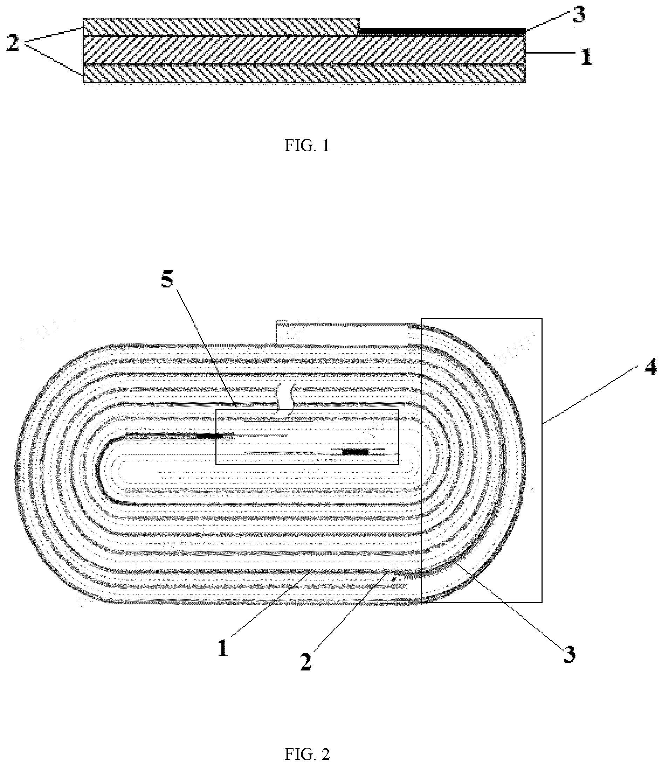

Preparation of the electrode plate: a target region (as shown in FIG.2, the winding tail end of the current collector) of the current collector is coated with the prepared slurry, and the solvent is dried to obtain the electrode plate coated with the functional layer. The region which is not coated with the functional layer is coated with slurry containing the active material, and then the electrode plate is obtained through drying and rolling.

The slurry containing the active material is positive active material slurry or negative active material slurry. Specifically, the positive active material slurry is the slurry prepared by mixing lithium cobalt oxide, conductive carbon and polyvinylidene fluoride in a mass ratio of 96:2:2 and adding N-methyl-2-pyrrolidone (NMP). The negative active material slurry is the slurry prepared by mixing graphite, butadiene styrene rubber and sodium carboxymethylcellulose in a mass ratio of 98:1:1 and adding deionized water.

Preparation of the secondary battery: a positive electrode, the isolating film (porous PE polymer film) and a negative electrode are stacked in sequence such that the isolating film is located between the positive electrode and the negative electrode to play a role in isolation, and then the electrode assembly is obtained through winding; the electrode assembly is placed in the outer packaging aluminum-plastic film, the electrolyte (a solution with the solvent being EC and DMC in a volume ratio of 1:1 and the mass concentration of LiPF₆ being 12.5% on the basis of the mass of the electrolyte) is injected, and the secondary battery is prepared through vacuum packaging, standing, formation, shaping and other procedures.

### Test methods

### 1. The thickness of the functional layer

a) In the environment of (25+/-3)°C, the electrode plate coated with the functional layer is disassembled from the secondary battery. If there is another coating on the other side of the current collector coated with the functional layer, the coating needs to be removed with a physical or chemical method without damaging the functional layer.
b) The electrode plate (including the current collector) coated with the functional layer is placed into the oven of 85°C to be dried for 30 min to 60 min to ensure that all the electrolyte in the functional layer is dried, thicknesses of at least 10 different points of the dried electrode plate (including the current collector) coated with the functional layer are measured by means of a micrometer, and a mean value of the thicknesses of all the test points is recorded as T1.
c) The functional layer is removed with a physical or chemical method without damaging the corresponding current collector, thicknesses of at least 10 different points of the current collector coated with the functional layer are measured by means of the micrometer, and a mean value of the thicknesses of all the test points is recorded as T0.
d) The thickness of the functional layer is: (T1 - T0).

### 2. Particle size test of the inorganic particles

Refer to GB/T 19077-2016 for a test method for particle sizes of the inorganic particles. A test device used is Mastersizer 3000 produced by the Malvern company. The index of refraction of the particles for test is 1.8, one sample is tested three times, the particle size of the particles is finally a mean value of the three tests, and Dv10, Dv50 and Dv90 are measured.

### 3. Thermogravimetric analysis of the functional layer

In the environment of (25+/-3)°C, the electrode plate coated with the functional layer is disassembled from the secondary battery. Powder is scraped from the electrode plate and is placed in a thermogravimetric analysis meter, a temperature range is set to be 20°C to 600°C, a heating rate is set to be 5°C/min, and a gas atmosphere is nitrogen.

### 4. Average coverage of the functional layer on the second region

In the environment of (25+/-3)°C, the electrode plate coated with the functional layer is disassembled from the electrochemical apparatus. The electrode plate is placed in the oven of 85°C for drying, the area W3 of the functional layer and the total area W2 of all blank current collectors in the electrode plate are measured respectively, and the average coverage of the functional layer on the second region is W3/W2 × 100%.

### 5. Ultrasonic test

A nondestructive ultrasonic intelligent diagnostic device (in the model of UBSC-LD) is used to emit the ultrasonic waves (50 MHZ and 400 mV) to the secondary battery in the thickness direction of the secondary battery, and a signal feedback distribution diagram of various portions of the battery to the ultrasonic waves is obtained. Integration software, for example, JMP software, is used to calculate the total area S of battery test in the signal feedback distribution diagram and the area S1 of the region with the signal intensity ≥ 1333 mV, and the ratio of the region with the signal intensity ≥ 1333 mV is: S1/S × 100%.

### 6. Bonding strength

The bonding strength between the functional layer and the current collector is tested with a 90° angle method by means of a high-speed rail tensile machine, that is:

A part of the electrode plate coated with the current collector in the secondary battery is prepared in a strip shape, and a part of the electrode plate is bonded to a steel plate by means of a double-faced adhesive tape from one end of the electrode plate in the length direction; then the steel plate is fixed to a corresponding position of the high-speed rail tensile machine, the electrode plate that is not bonded to the steel plate is pulled, the electrode plate is placed into a chuck by means of a connector or directly to be clamped, the test by the high-speed rail tensile machine can be started when the tension of a clamping opening is greater than 0 kgf and less than 0.02 kgf, and an average tensile value of a stable region is finally measured to be recorded as the bonding strength between the functional layer and the current collector.

### 7. Electrolyte retention rate

a) In the environment of (25+/-3)°C, the electrode plate coated with the functional layer is disassembled from the secondary battery. If there is another coating on the other side of the current collector coated with the functional layer, the coating needs to be removed with a physical or chemical method without damaging the functional layer. Then the current collector coated with the functional layer is cut by means of a sheet-cutting machine.
b) The cut current collector coated with the functional layer (including the current collector) is weighed at least three times respectively by means of an electronic balance, the weight is recorded as m1, m2, m3 ... respectively, and a mean value m is obtained.
c) The weighed current collector coated with the functional layer (including the current collector) is placed into the oven of 85°C to be dried for 30 min to 60 min to ensure that all the electrolyte in the functional layer is dried, then the dried current collector coated with the functional layer is weighed again at least three times respectively, the weight is recorded as M1, M2, M3 ... respectively, and a mean value M is obtained.
d) The functional layer is removed with a physical or chemical method without damaging the corresponding current collector, the corresponding current collector is weighed at least three times, the weight is recorded as G1, G2, G3 ... respectively, and a mean value G is obtained.
e) The electrolyte retention rate of the functional layer is recorded as: R = (m - M)/(M - G) × 100%.

### 8. Swelling degree

a) Coating preparation: in the environment of (25+/-3)°C, the electrode plate coated with the functional layer is disassembled from the secondary battery. If there is another coating on the other side of the current collector coated with the functional layer, the coating needs to be removed with a physical or chemical method without damaging the functional layer. Then the current collector coated with the functional layer is cut by means of the sheet-cutting machine, the current collector is placed into dimethyl carbonate (DMC) to be soaked to remove the electrolyte dissolved in the functional layer, the current collector is taken out for drying and then is placed into water to dissolve the functional layer to form a solution, the solution is poured into a coating preparation mold, and the mold is lifted to remove bubbles if there are bubbles; the mold is placed into the oven of 60°C for 12 h, after baking, the appearance and hardness of the coating are observed; and if the coating is not completely dried, the mold is baked continuously until it is dried.
b) The prepared coating is cut into small strips by means of scissors.
c) The small coating strips are weighed, the initial weight a is recorded; and the small strips are placed into a small bottle, the electrolyte (a solution with the solvent being EC and DMC in a volume ratio of 1:1 and the mass concentration of LiPF₆ being 12.5% on the basis of the mass of the electrolyte) is added and exceeds the coating by 2-3 cm, and the small bottle is sealed and placed into a vacuum drying furnace at the temperature of 85°C for 6 h.
d) Test of the swelling degree of the coating: the coating is taken out and wiped clean with dust-free paper, and the coating weight b at this time is recorded.

The swelling degree = (b - a)/a × 100%. Three duplicate samples are prepared, an arithmetic mean of the obtained swelling degrees is obtained, and then the swelling degree of the functional layer is obtained.

### 9. Flatness

The flatness of the secondary battery is tested with a laser scanning method. Specifically, by means of an optical device, the entire contour of the secondary battery is scanned to prepare a 3D model, then a difference value of an entire thickness value and a thickness value of a section is calculated and recorded as P, and the difference value is the flatness of the secondary battery. If P ≤ 0.5 mm, the flatness of the secondary battery at this time is OK and meets the requirement; and if P > 0.5 mm, the flatness at this time is NG and does not meet the requirement.

### 10. Nail puncturing passing rate

The secondary battery to be tested is charged with a constant current at a rate of 0.05 C to a designed full-charge voltage, and then is charged at the designed full-charge voltage until the current is 0.025 C (cut-off current), so that the secondary battery reaches the full-charge state, and the appearance of the secondary battery before test is recorded. A nail puncturing test is performed on the battery in the environment of 25+/-3°C, the diameter of a steel nail is 4 mm, the puncturing speed is 30 mm/s, the nail puncturing position is located at the geometric center of the secondary battery, the test is stopped after the test is performed for 3.5 min or the surface temperature of the electrode assembly is reduced to 50°C, 10 secondary batteries are taken as a group, the states of the secondary batteries in the test process are observed, and the determination standard is that the secondary batteries do not burn and do not explode.

### 11. Impact test

1). Full-charge: in the environment of 25+/-3°C, the battery is charged with a constant current (CC) at a rate of 0.7 C to 4.45 V and then is charged at the 4.45 V constant voltage (CV) to 0.02 C; and an open-circuit voltage (OCV)/AC internal resistance (IMP) of the test battery is recorded and photographed.
2). A round bar with the diameter being ϕ15.8+/-0.1 mm is placed in the middle of the secondary battery (perpendicular to a tab direction).
3). A counter weight of 9.1+/-0.1 Kg drops vertically in a free state from a height of 61+/-2.5 cm from the round bar.
4). The test is stopped after the surface temperature of the secondary battery is reduced to 50°C, and the OCV/IMP is recorded and photographed.
5). 10 secondary batteries are taken as a group, the states of the secondary batteries in the test process are observed, and the determination standard is that the secondary batteries do not burn and do not explode.

### 12. Free drop test

1). The secondary battery is full charged from 0.5C CC to 4.45V and 4.45V CV to 0.02C.
2). After full-charge is finished, the OCV and the IMP of the sample are recorded and recorded, the appearance is checked and photographed.
3). The secondary battery drops freely from the height of 1.8 m to a smooth marble surface.
4). The drop sequence (six surfaces and four corners) is as follows: a front surface, a right side, a back surface, a left side, an upper surface, a lower surface, an upper left corner, an upper right corner, a lower left corner and a lower right corner, and each surface/corner being dropped once continuously as one round.
5). The OCV and the IMP are tested and recorded after each round of test, the appearance is checked, one group of samples drop five rounds in total, and 10 secondary batteries are taken as a group.
6). All failed secondary batteries are photographed separately.
7). After dropping, the samples are left to stand for 24 h, and the OCV and the IMP are tested and recorded.
8). After the test ends, the appearance is checked and photographed.
9). The determination standards are than the batteries are free from damage, electrolyte leakage, smoke and fire and the voltage drop is less than 15 mv.

### 13. 25°C/45°C cycle capacity retention rate

Land CT2001A is used, and the cycle performance is tested in the environment of 25°C/45°C(+/-3°C). The secondary battery is charged with the constant current at the current density of 0.2 C to 4.45 V and then charged at the 4.45 V constant voltage until the current is less than 50 µA; and then the secondary battery is discharged at the constant current at the current density of 0.2 C to 3.0 V, the discharge capacity of the first cycle is recorded as the initial capacity C0, said charge and discharge cycles are repeated for 500 cycles, the discharge capacity of the 500th cycle is recorded as C500, and the 200th cycle capacity retention rate = C500/C0 × 100%.

### Test results

**Table 1-1**

| Embodi ments and compar ison embodi ments | Functional layer | | | | | | | | |
|---|---|---|---|---|---|---|---|---|---|
| | Binder | Inorganic particles | | | | Thick ness H1 µm | Swelli ng degre e % | Exother mic peak tempera ture °C | Covera ge % |
| | | Type | Dv90 µm | Dv50 µm | Dv10 µm | | | | |
| 1-1 | | | 3.5 | 1.5 | 0.5 | 1 | 550 | 435 | 95 |
| 1-2 | | | 3.5 | 1.5 | 0.5 | 2 | 550 | 435 | 95 |
| 1-3 | | | 3.5 | 1.5 | 0.5 | 4 | 550 | 435 | 95 |
| 1-4 | | | 3.5 | 1.5 | 0.5 | 6 | 550 | 435 | 95 |
| 1-5 | Pure acrylic emulsio n (100%) | Boehmit e | 3.5 | 1.5 | 0.5 | 8 | 550 | 435 | 95 |
| 1-6 | | | 3.5 | 1.5 | 0.5 | 10 | 550 | 435 | 95 |
| 1-7 | | | 3.5 | 1.5 | 0.5 | 11 | 550 | 435 | 95 |
| 1-8 | | | 3.5 | 1.5 | 0.5 | 12 | 550 | 435 | 95 |
| 1-9 | | | 3.5 | 1.5 | 0.5 | 13 | 550 | 435 | 95 |
| 1-10 | | | 3.5 | 1.5 | 0.5 | 14 | 550 | 435 | 95 |
| 1-11 | | | 3.5 | 1.5 | 0.5 | 15 | 550 | 435 | 95 |
| 1-12 | Polyvin ylidene fluoride (100%) | Boehmit e | 3.5 | 1.8 | 1.0 | 10 | 25 | 200 | 95 |
| Compar ison embodi ment 1-1 | No functional layer | | | | | | | | |

**Table 1-2**

| Embodiments and comparison embodiments | Secondary battery | | | | | | | | |
|---|---|---|---|---|---|---|---|---|---|
| | Electrolyte retention rate % | Ratio of region with wave number ≥ 1333 mV % | Flatness mm | Bonding strength N/m | Nail puncturing passing rate % | Impact passing rate % | Free drop passing rate % | 25°C cycle capacity retention rate (500 cycles) % | 45°C cycle capacity retention rate (500 cycles) % |
| 1-1 | 20 | 20 | 0.52 | 100 | 30 | 80 | 80 | 88.0 | 87.0 |
| 1-2 | 30 | 25 | 0.51 | 100 | 30 | 80 | 80 | 91.6 | 87.6 |
| 1-3 | 60 | 30 | 0.51 | 110 | 30 | 80 | 80 | 91.0 | 88.7 |
| 1-4 | 70 | 45 | 0.3 | 120 | 30 | 80 | 80 | 93.6 | 90.8 |
| 1-5 | 80 | 60 | 0.26 | 110 | 30 | 80 | 80 | 93.0 | 90.0 |
| 1-6 | 100 | 95 | 0.15 | 120 | 30 | 80 | 80 | 96.0 | 91.5 |
| 1-7 | 95 | 80 | 0.18 | 100 | 30 | 80 | 80 | 95.5 | 90.5 |
| 1-8 | 95 | 80 | 0.2 | 100 | 30 | 80 | 80 | 95.6 | 90.6 |
| 1-9 | 95 | 80 | 0.2 | 100 | 30 | 80 | 80 | 96.0 | 90.7 |
| 1-10 | 95 | 80 | 0.2 | 100 | 30 | 80 | 80 | 96.0 | 90.8 |
| 1-11 | 90 | 75 | 0.23 | 100 | 30 | 80 | 80 | 95.8 | 91 |
| 1-12 | 10 | 5 | 0.52 | 20 | 10 | 30 | 30 | 87.0 | 85.0 |
| Comparison embodiment 1-1 | 0 | 5 | 0.53 | 0 | 0 | 20 | 20 | 90.0 | 86.0 |

It can be seen from data in Tables 1 that in a certain range, the thickness of the functional layer is a key factor that affects the electrolyte retention rate, the ratio of the region with the wave number ≥ 1333 mV, the flatness and the capacity retention rate, and when 5µm ≤ H ≤ 15um, the appearance flatness and later cycle performance of the secondary battery can be further improved.

**Table 2-1**

| Embodi ments and compari son embodi ments | Functional layer | | | | | | | | |
|---|---|---|---|---|---|---|---|---|---|
| | Binder | Inorganic particles | | | | Thic kness H1 µm | Swelli ng degree % | Exother mic peak temperat ure °C | Cove rage % |
| | | Type | Dv90 µm | Dv50 µm | Dv10 µm | | | | |
| 2-1 | Styrene-acrylic emulsion (100%) | Boeh mite | 4 | 1.8 | 0.5 | 10 | 230 | 300 | 95 |
| 2-2 | Pure acrylic emulsion (50%) + styrene-acrylic emulsion (50%) | | 4 | 1.8 | 0.5 | 10 | 400 | 350 | 95 |
| 2-3 | Pure acrylic emulsion (60%) + styrene-acrylic emulsion (40%) | | 4 | 1.8 | 0.5 | 10 | 450 | 400 | 95 |
| 2-4 | Pure acrylic emulsion (70%) + styrene-acrylic emulsion (30%) | | 4 | 1.8 | 0.5 | 10 | 500 | 410 | 95 |
| 2-5 | Pure acrylic emulsion (80%) + styrene-acrylic emulsion (20%) | | 4 | 1.8 | 0.5 | 10 | 510 | 420 | 95 |
| 2-6 | Pure acrylic emulsion (90%) + styrene-acrylic emulsion (10%) | | 4 | 1.5 | 0.5 | 10 | 530 | 430 | 95 |
| 2-7 | Pure acrylic emulsion (100%) | | 3.5 | 1.5 | 0.5 | 10 | 550 | 435 | 95 |

| | | | | | | | | | |
|---|---|---|---|---|---|---|---|---|---|
| Note: the percentage content of components of the binder is the mass fraction content. | | | | | | | | | |

**Table 2-2**

| Embodim ents and compariso n embodime nts | Secondary battery | | | | | | | | |
|---|---|---|---|---|---|---|---|---|---|
| | Electrol yte retentio n rate % | Ratio of regio n with wave numb er ≥ 1333 mV % | Flatne ss mm | Bondi ng streng th N/m | Nail puncturi ng passing rate % | Impa ct passi ng rate % | Free drop passi ng rate % | 25°C cycle capaci ty retenti on rate (500 cycles ) % | 45°C cycle capaci ty retenti on rate (500 cycles ) % |
| 2-1 | 30 | 25 | 0.53 | 100 | 30 | 80 | 80 | 90.0 | 85 |
| 2-2 | 55 | 30 | 0.5 | 140 | 30 | 80 | 80 | 93.0 | 89.0 |
| 2-3 | 60 | 35 | 0.4 | 150 | 30 | 80 | 80 | 95.0 | 90.0 |
| 2-4 | 65 | 37 | 0.4 | 160 | 30 | 80 | 80 | 95.5 | 90.5 |
| 2-5 | 80 | 40 | 0.3 | 170 | 30 | 80 | 80 | 95.6 | 90.6 |
| 2-6 | 85 | 45 | 0.24 | 200 | 30 | 80 | 80 | 97.0 | 90.7 |
| 2-7 | 95 | 80 | 0.2 | 150 | 30 | 80 | 80 | 96.0 | 90.8 |

It can be seen from data in Table 2-1 and Table 2-2 that the components of the binder will directly affect the swelling degree thereof, thereby affecting the electrolyte retention rate, the ratio of the region with the wave number ≥ 1333 mV, the flatness and the cycle capacity retention rate; and under the condition of ensuring the stability of the functional layer, as the swelling degree increases, the electrolyte retention rate and the ratio of the region with the wave number ≥ 1333 mV increases, and the corresponding battery capacity retention rate increases.

**Table 3-1**

| Embo diment s and compa rison embod iments | Functional layer | | | | | | | | |
|---|---|---|---|---|---|---|---|---|---|
| | Binder | Inorganic particles | | | | Thic knes s H1 µm | Swell ing degre e % | Exothe rmic peak temper ature °C | Coverage % |
| | | Type | Dv90 µm | Dv50 µm | Dv10 µm | | | | |
| 3-1 | Pure acrylic emulsion (100%) | Boehmit e | 3.5 | 1.5 | 0.5 | 10 | 550 | 435 | 95 |
| 3-2 | | Diaspore | 3.5 | 1.5 | 0.5 | 10 | 550 | 435 | 95 |
| 3-3 | | Aluminu m oxide | 3.5 | 1.5 | 0.5 | 10 | 550 | 435 | 95 |
| 3-4 | | Calcium silicate | 3.5 | 1.5 | 0.5 | 10 | 550 | 435 | 95 |
| 3-5 | | Barium sulfate | 3.5 | 1.5 | 0.5 | 10 | 550 | 435 | 95 |
| 3-6 | | Calcium sulfate | 3.5 | 1.5 | 0.5 | 10 | 550 | 435 | 95 |

| | | | | | | | | | |
|---|---|---|---|---|---|---|---|---|---|
| Note: the percentage content of components of the binder is the mass fraction content. | | | | | | | | | |

**Table 3-2**

| Embodim ents and compariso n embodime nts | Secondary battery | | | | | | | | |
|---|---|---|---|---|---|---|---|---|---|
| | Electrol yte retentio n rate % | Ratio of regio n with wave numb er ≥ 1333 mV % | Flatne ss mm | Bondi ng streng th N/m | Nail puncturi ng passing rate % | Impa ct passi ng rate % | Free drop passi ng rate % | 25°C cycle capaci ty retenti on rate (500 cycles ) % | 45°C cycle capaci ty retenti on rate (500 cycles ) % |
| 3-1 | 60 | 65 | 0.3 | 100 | 30 | 80 | 80 | 96.8 | 91.0 |
| 3-2 | 60 | 65 | 0.3 | 100 | 30 | 60 | 60 | 97.0 | 92.0 |
| 3-3 | 60 | 65 | 0.3 | 100 | 20 | 70 | 70 | 95.0 | 91.0 |
| 3-4 | 60 | 65 | 0.3 | 100 | 20 | 50 | 50 | 96.0 | 91.0 |
| 3-5 | 60 | 65 | 0.3 | 100 | 20 | 50 | 50 | 96 | 90.00 |
| 3-6 | 60 | 65 | 0.3 | 100 | 20 | 50 | 50 | 95 | 90.50 |

It can be seen from data in Table 3-1 and Table 3-2 that the types of the inorganic particles will affect the safety performance of the secondary battery, the main reason is that the shapes of the inorganic particles of different types are different, and the shapes of the inorganic particles will affect the appearance (such as the flatness) of the coating, thereby affecting the safety performance of the battery. According to the embodiments, if boehmite is used, the safety performance of the secondary battery is relatively good.

**Table 4-1**

| Embodi ments and compar ison embodi ments | Functional layer | | | | | | | | |
|---|---|---|---|---|---|---|---|---|---|
| | Binder | Inorganic particles | | | | Thick ness H1 µm | Swelli ng degre e % | Exother mic peak tempera ture °C | Covera ge % |
| | | Type | Dv90 µm | Dv50 µm | Dv10 µm | | | | |
| 4-1 | Pure acrylic emulsio n (100%) | Boehmit e | 3.5 | 1.5 | 0.5 | 10 | 550 | 435 | 20 |
| 4-2 | | | 3.5 | 1.5 | 0.5 | 10 | 550 | 435 | 40 |
| 4-3 | | | 3.5 | 1.5 | 0.5 | 10 | 550 | 435 | 60 |
| 4-4 | | | 3.5 | 1.5 | 0.5 | 10 | 550 | 435 | 80 |
| 4-5 | | | 3.5 | 1.5 | 0.5 | 10 | 550 | 435 | 90 |
| 4-6 | | | 3.5 | 1.5 | 0.5 | 10 | 550 | 435 | 95 |
| 4-7 | | | 3.5 | 1.5 | 0.5 | 10 | 550 | 435 | 100 |

**Table 4-2**

| Embodim ents and compariso n embodime nts | Secondary battery | | | | | | | | |
|---|---|---|---|---|---|---|---|---|---|
| | Electrol yte retentio n rate % | Ratio of regio n with wave numb er ≥ 1333 mV % | Flatne ss mm | Bondi ng streng th N/m | Nail puncturi ng passing rate % | Impa ct passi ng rate % | Free drop passi ng rate % | 25°C cycle capaci ty retenti on rate (500 cycles ) % | 45°C cycle capaci ty retenti on rate (500 cycles ) % |
| 4-1 | 60 | 56 | 0.52 | 100 | 10 | 50 | 40 | 93 | 90.70 |
| 4-2 | 60 | 57 | 0.3 | 100 | 10 | 50 | 50 | 93.5 | 90.80 |
| 4-3 | 60 | 58 | 0.3 | 100 | 15 | 60 | 60 | 93.6 | 90.90 |
| 4-4 | 60 | 59 | 0.25 | 100 | 20 | 70 | 70 | 94 | 91.0 |
| 4-5 | 60 | 60 | 0.2 | 100 | 20 | 80 | 70 | 94.5 | 91.70 |
| 4-6 | 60 | 65 | 0.15 | 100 | 30 | 80 | 80 | 95 | 91.7 |
| 4-7 | 60 | 65 | 0.15 | 100 | 30 | 80 | 80 | 96 | 91.70 |

It can be seen from data in Table 4-1 and Table 4-2 that the coverage of the functional layer directly affects the safety performance and electrical performance of the battery, as the coverage increases, the performance of the battery is improved, and when the coverage is in a range of 80%-100%, the performance of the battery is the best.

Although the illustrative embodiments are demonstrated and described, a person skilled in the art should understand that the above embodiments cannot be explained as limitations on this application, and the embodiments can be changed, replaced and amended without departing from the spirit, principle and scope of this application.

## Claims

1. An electrochemical apparatus, comprising an electrode assembly, wherein the electrode assembly comprises an electrode plate; the electrode plate comprises a current collector; the current collector comprises a first region and a second region; an active material layer is arranged on the first region; and a functional layer is arranged on the second region, and the functional layer comprises an organic polymer and inorganic particles,
wherein a thickness of the functional layer is H1, wherein 1 µm ≤ H1 ≤ 15 µm; and Dv90 of the inorganic particles satisfies: 1 µm ≤ Dv90 ≤ 4.5 µm.

2. The electrochemical apparatus according to claim 1, wherein 5 µm ≤ H1 ≤ 15 µm.

3. The electrochemical apparatus according to claim 1, wherein the inorganic particles satisfy at least one of following conditions (a) to (c):
(a) the inorganic particles satisfy 0.1 µm ≤ Dv10 ≤ 0.8 µm;
(b) the inorganic particles satisfy 0.5 µm < Dv50 ≤ 2.0 µm; or
(c) the inorganic particles satisfy 1 µm ≤ Dv90 ≤ 2.5Dv50.

4. The electrochemical apparatus according to claim 1, wherein a coverage of the functional layer on the second region is in a range of 80% to 100%.

5. The electrochemical apparatus according to claim 1, wherein the inorganic particles comprise at least one of boehmite, diaspore, aluminum oxide, barium sulfate, calcium sulfate or calcium silicate.

6. The electrochemical apparatus according to claim 1, wherein the organic polymer comprises a polymer formed by at least one of acrylic monomers, acrylate monomers or styrene monomers.

7. The electrochemical apparatus according to claim 1, wherein the functional layer satisfies at least one of following conditions (d) to (f):
(d) a swelling degree of the functional layer is in a range of 200% to 800%;
(e) a thermo-gravimetric analysis of the functional layer, the functional layer contains a substance having an exothermic peak in a range of 280°C to 460°C; and
(f) on the basis of a mass of the functional layer, a mass percentage content of the organic polymer is in a range of 20% to 90%.

8. The electrochemical apparatus according to claim 1, wherein the electrochemical apparatus satisfies at least one of following conditions (g) to (i):
(g) a bonding strength between the functional layer and the current collector is in a range of 100 N/m to 600 N/m;
(h) in a nondestructive ultrasonic intelligent diagnostic system testing, in a thickness direction of the electrochemical apparatus, ultrasonic waves are emitted to the electrochemical apparatus, a signal feedback distribution diagram of the electrochemical apparatus to the ultrasonic waves, and on the basis of the area of the electrochemical apparatus in the signal feedback distribution diagram, an area ratio of a region with the super signal intensity greater than or equal to 1333 mV is in a range of 30% to 95%; and
(i) the flatness of the electrochemical apparatus is in a range of 0 to 0.5 mm.

9. The electrochemical apparatus according to claim 1, wherein the electrode assembly is a wound type electrode assembly, the second region is arranged at a winding starting end and a winding tail end of the current collector, and the functional layer is arranged on the second region of the tail end.

10. An electronic apparatus, comprising the electrochemical apparatus according to any one of claims 1 to 9.
